(19) **Europäisches Patentamt / European Patent Office / Office européen des brevets**

(11) **EP 1 828 799 B1**

(12) # EUROPEAN PATENT SPECIFICATION

(45) Date of publication and mention
of the grant of the patent:
**10.08.2016 Bulletin 2016/32**

(51) Int Cl.:
**G01S 5/06** (2006.01)     **G01S 5/02** (2006.01)

(21) Application number: **05815982.3**

(22) Date of filing: **01.12.2005**

(86) International application number:
**PCT/GB2005/050223**

(87) International publication number:
**WO 2006/059155 (08.06.2006 Gazette 2006/23)**

(54) **EMITTER GEOLOCATION**

EMITTER-GEOLOKALISIERUNG

GEOLOCALISATION D'EMETTEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.12.2004 GB 0426815**

(43) Date of publication of application:
**05.09.2007 Bulletin 2007/36**

(73) Proprietor: **SELEX ES LTD**
**Basildon, Essex SS14 3EL (GB)**

(72) Inventors:
• **SARNO, G. C.,**
c/o BAE SYSTEMS Adv. Tech. Ctr.
**Chelmsford Essex CM2 8HN (GB)**
• **LARSEN, Ray,**
c/o BAE SYSTEMS Adv. Tech. Ctr.
**Chelmsford,**
**Essex CM2 8HN (GB)**

(74) Representative: **Wojcik, Lucy Eleanor et al**
**SELEX GALILEO LIMITED**
**c/o Impetus IP Limited**
**Suite 31**
**West Devon Business Park**
**Brook Lane**
**Tavistock**
**Devon PL19 9DP (GB)**

(56) References cited:
**US-B1- 6 255 992     US-B1- 6 407 703**

• JUNHO CHOI ET AL: "Localization of target tracking and navigation by correcting atmospheric effects" IGARSS 2001. IEEE 2001 INTERNATIONAL GEOSCIENCE AND REMOTE SENSING SYMPOSIUM. SYDNEY, AUSTRALIA, JULY 9 - 13, 2001, IEEE INTERNATIONAL GEOSCIENCE AND REMOTE SENSING SYMPOSIUM, NEW YORK, NY : IEEE, US, vol. VOL. 1 OF 7, 9 July 2001 (2001-07-09), pages 1711-1713, XP010572231 ISBN: 0-7803-7031-7
• LAMONT V. BLAKE: "Ray Height Computation for a Continuous Nonlinear Atmospheric Refractive-Index Profile" RADIO SCIENCE, vol. 3, no. 1, January 1968 (1968-01), XP009062234

EP 1 828 799 B1

**Description**

**Field of the Invention**

The present invention relates to a method and means of locating the position of an emitter of electromagnetic waves by means of a plurality of receivers.

**Backgroud of the invention**

Systems are well known for computing position information of a ground based emitter from a number of airborne platforms. Techniques, known as emitter geolocation, or multiple platform emitter geolocation, incorporate a variety of radar, GPS and communications technologies. One such technique involves computing time difference time of arrival (TDOA) of a signal from an emitter arriving at a number of receptors. A review of location techniques is presented in "Microwave Emitter Position Location: Present and Future", Paradowski, pages 97-116, 12th International Conference on Microwaves and Radar, 1998. MIKON '98, Volume: 4, 20-22 May 1998.

Corrections in radar systems for bending of the line of propagation due to refraction in the earth's atmosphere are necessary so that correct range to an emitter can be deduced. Detailed algorithms are described in LV. Blake, Lexington Books, "Radar Range-Performance Analysis".

**Summary of the Invention**

According to the invention there is provided a method for locating an emitter of electromagnetic waves utilising a plurality of receivers, the method comprising the steps of: (a) detecting the times of arrival of said electromagnetic waves at said receivers; (b) computing the relative time difference of arrival between said receivers using said detected times of arrival; (c) estimating the position of the emitter from said computed relative time differences of arrival; and (d) correcting said detected times of arrival for path length discrepancies caused by the earth's atmosphere; characterised in that step (d) includes the additional steps of (e) measuring time differences of arrival between pairs of said receivers; (f) obtaining an estimate of emitter position assuming a straight-line path between each receiver and said emitter; (g) for each receiver using said estimate and obtaining the ground range from emitter to receiving platform; (h) using said ground range known receiving platform height and an assumed refractive profile in selected ray-tracing integral equation to predict actual path length; (i) obtaining the difference between said predicted path length and said straight-line paths to form corrections to said time differences of arrival; (j) repeating steps (e) to (i) until said corrections converge; and (k) applying said converged corrections to correct said detected times of arrival of said electromagnetic waves at said receivers.

According to the invention there is further provided apparatus for carrying out the method according to any one of the preceding claims, the apparatus comprising: a plurality of receivers, each receiver including means for detecting the time of arrival of electromagnetic waves received thereat; means for computing the relative time differences of arrival between said receivers and for estimating the position of the said emitter; and means for correcting said detected times of arrival for path length discrepancies caused by the earth's atmosphere; characterised in that the correcting means is arranged to carry out the following steps: (a) measure time differences of arrival between said pairs of said receivers; (b) assuming straight line paths, obtain an estimate of emitter position; (c) for each receiver, using said estimate to obtain the ground range from emitter to receiving platform; (d) using said ground range and known receiving platform height and an assumed refractive profile in a selected ray tracing integral equation, predict actual path length; (e) obtain the difference between said predicted path length and the straight-line path obtained from the estimated emitter position to form a correction to said time differences of arrival in step (a); (f) return to step (a) and; continue until the corrections in step (e) converge; then apply said detected times of arrival of said electromagnetic waves at said receivers.

In at least a preferred embodiment, the invention includes an algorithm that applies a correction for the effect of atmospheric propagation on the time-of-arrival (TOA) of an RF signal emanating from a ground-based emitter and received at a number of airborne platforms. Variation in the refractive profile of the atmosphere causes RF signals to "bend" and to deviate from a straight line path. The actual path taken by the signal is thus longer than the direct path. This affects the estimate of the duration of the flight of the signal. A traditional method of location of emitters is TDOA which uses the difference in time-of-flight observed by pairs of receiving platforms. Path bending, as described above, will affect these measurements and, hence, affect the location of the emitter. Without correction of path bending the estimate of the emitter location will be significantly in error.

The algorithm is an iterative scheme that provides a refined estimate of the emitter location. This is done by forming an initial estimate of the emitter location using the TDOA technique and the uncorrected TOA measurements. A ray tracing integral is then used with this initial emitter location estimate to estimate the true path (to each receiving platform). This results in refined TOA measurements, thus refined TDOA estimates and thus a refined emitter location estimate. The procedure is continued until the differences between successive TDOA corrections are sufficiently small.

The invention improves the estimation of the location of an emitter when airborne receiving platforms are used to locate ground-based emitters, particularly when the receiving platforms are a great distance away from the emitter. It has proved, surprisingly, that very few iterations are required before convergence to an acceptable solution is obtained. Further, the invention has been shown to work with non-standard atmospheres, including specialised atmospheric refractive profiles. The invention may work with any arbitrary atmospheric refractive profile, even if not defined fully by mathematical equations.

The invention has been proved in the context of location of a ground-based RF emitter by airborne platforms. The invention works, with little modification, in the opposite sense, i.e. the location of an airborne emitter by ground-based (or airborne) receiving platforms.

The invention is applicable to path length variations in the context of locating emitters subject to different atmospheric effects, provided the atmospheric effect can be represented as a function of geometric parameters such as range and height.

Having regard to the foregoing, thus, it is to be appreciated that the invention also resides in a computer program comprising program code means which when loaded into a computer will enable it to operate in the apparatus described hereinabove. Further, the invention also resides in a computer program comprising program code means for performing the method steps described hereinabove when the program is run on a computer. Furthermore, the invention also resides in a computer program product comprising program code means stored on a computer readable medium for performing the method steps described hereinabove when the program is run on a computer.

## Brief Description of the Drawings

A preferred embodiment of the invention will now be described with reference to the accompanying drawings wherein:

Figure 1 is a schematic illustration of a preferred embodiment of the invention, showing the effect of atmospheric refraction on signal propagation path between a ground emitter and an airborne receiving platform;

Figure 2 is a flow diagram of a TDOA correction estimation algorithm incorporated in the preferred embodiment;

Figure 3 is a geometric figure used in the algorithm of figure 2;

Figure 4 is a block diagram of a modification of the first embodiment employing a Kalman filter;

Figure 5 is a plot of actual emitter location estimate before/after refraction correction in an example;

Figure 6 is a histogram showing the number of iterations required to achieve convergence in the algorithm of Figure 2;

Figure 7 is a plot showing location solution without Kalman Filter correction; and

Figure 8 is a plot showing location solution with Kalman Filter correction.

## Description of the Preferred Embodiment

In a location system that uses time-difference of arrival (TDOA) measurements for geo-locating an emitter it has previously been assumed that the ray path from the emitter to each measuring platform is a straight line. With no refraction this assumption is true. However, electromagnetic waves always refract (bend) for various reasons. The refractive index of the atmosphere varies with air pressure, temperature and water content and is a function of altitude. Ducts, such as evaporation ducts over the sea surface, will also cause ray bending.

A common refractive profile (refractivity versus height) in radar is to assume an atmosphere that has a constant gradient with height. This gives rise to the "4/3 model" where the earth radius is multiplied by 4/3 to obtain an Earth where EM rays become straight lines. This model is satisfactory for low altitudes; beyond about 5 to 8km the model is unrepresentative. There are a number of different profiles in existence, including those particular to specific regions. For envisaged large slant ranges to the emitter (> 300km) the ray-bending effect becomes important. Without correction, it is reasonable to assume that the emitter location would be estimated wrongly (as shown below, principally in altitude). In accordance with the invention, an iterative algorithm is provided that provides an estimate of corrections to apply to TDOA measurements to convert them to measurements that represent the straight-line path (non-refractive) from the emitter to each ELS (Emitter Location System) platform. A Kalman filter, for refinement of emitter location estimation, may be provided.

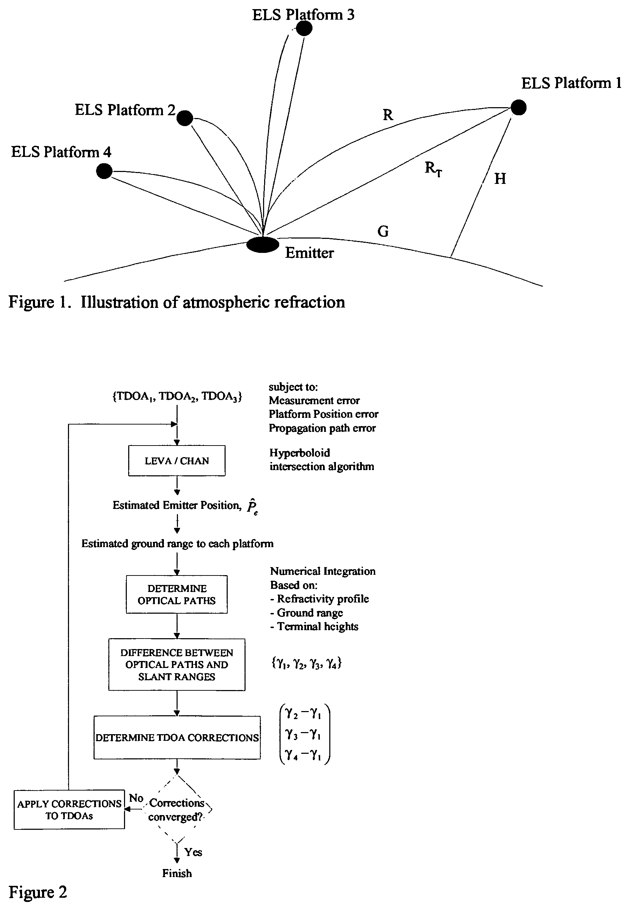

The problem due to refraction through the atmosphere of an emitter's transmissions on emitter geo-location is illustrated schematically in Figure 1. Four ELS, 1, 2, 3 and 4 are shown, providing three pairs of measurement platforms. Emission from an Emitter undergoes refraction and will be seen at an ELS platform with a larger time-of-arrival (TOA), R, than expected from a straight-line path ($R_T$). The resultant TDOA from a pair of platforms will be different than the TDOA obtained by assuming straight-line paths R, because the path bending to each platform will be different. Each ELS includes a Radar antenna A, a receiver Rx, controller C, and transceiver T. The TDOA obtained from a pair of ELS platforms characterises a hyperboloid in space, whose surface represents a region of possible emitter location, to derive the same TDOA value (with measurement error there is uncertainty in the true emitter position). The hyperboloids based on the actual TDOA values will be different in shape to those representing the straight-line TDOAs, and hence the intersection of the hyperboloids (in this case, three, from three pairs of ELS platforms), representing the emitter location, will be in error too.

The receiving platforms observe signals from an emitter with a time-of-flight related to range R. However, these platforms, when attempting to locate the emitter, have previously assumed that the path is denoted by $R_T$. The emitter is assumed to be further away than it is. The TDOA technique actually obtains differences in the bent paths R for the various receiving platforms used and thus obtains incorrect TDOA measurements. In accordance with the invention, the following equation denotes the TDOA obtained from platform i and j (strictly speaking this equation defines a Range-Difference of arrival rather than Time-Difference, but this is unimportant to the algorithm):

$$TDOA_{i,j} = f\left(\hat{X}_j, \hat{Y}_j, \hat{Z}_j, x_e, y_e, z_e,\right) - f\left(\hat{X}_i, \hat{Y}_i, \hat{Z}_i, x_e, y_e, z_e,\right) + \gamma_j - \gamma_i$$

where f is a non-linear function which gives slant range (or equivalently, straight-line time of flight) from emitter at ($x_e$, $y_e$, $z_e$) to platform at (X, Y, Z). The platform positions are labelled ($\hat{X}, \hat{Y}, \hat{Z}$) to emphasise that platform positions are not exactly known and thus contribute to TDOA measurement error. $\gamma_i$ is the additional path due to path bending (in range or time) for platform i compared to a straight line path.

The invention minimises $\gamma_j$-$\gamma_i$, the residual path length due to differences in path bending to platforms i and j. The algorithm is described by the flow diagram shown in figure 2. The steps are as follows:

1. Measure TDOA between pairs of platforms (minimum of 3 pairs required for 3D location of emitter).

2. Assuming straight-line paths, use an algorithm, e.g. Leva "An alternative closed-form solution to the GPS pseudorange equations" Mitre Journal 1997, pages 39 to 54, to obtain a 3D estimate of emitter position

Then, for each receiving platform:

3. Using this initial emitter estimate, obtain the ground range G from emitter to a receiving platform.

4. Use the ground range, (known) receiving platform height, and assumed refractive profile in a ray-tracing integral equation (See L. V. Blake, "Radar Range-Performance Analysis", Lexington Books) to predict the bent path length:

$$R = \int_{h_0}^{h_1} \frac{n(h)}{\sqrt{1 - \left[\dfrac{n_0 \cos(\theta_0)}{n(h)\left[1 + \dfrac{h}{re}\right]}\right]^2}} \, .dh$$

where n (h) describes the atmospheric refractive profile as a function of height

$n_0$ is the refractive index at the earth surface

$\theta_0$ is the take-off angle of the ray at the emitter

$h_0$ and $h_1$ are the start and end heights of the path

re is the earth radius

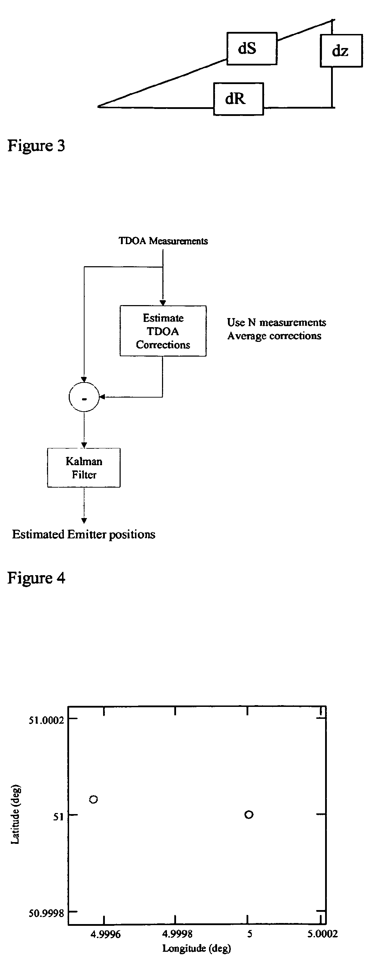

The integral is recast, for the purposes of this algorithm, so that the integral is in terms of ground range rather than height. A problem in using the above is that the take-off angle for each refracted path is not known. This is the reason why an initial estimate of emitter location is required, since this will provide an estimate of range between emitter and platform (e.g. ground range). By resetting the above integral into a different form one may integrate in terms of ground range; then the path calculation takes the form of a simple root-finding problem where one attempts to find a take-off angle which provides a path with the correct final height, $h_1$, at the correct ground range G. The algorithm for numerically integrating this "alternative" ray-tracing integral is as follows (see the right angled triangle of Figure 3):

$$dS = C*dR + |(m^2 - C^2)^{1/2} * dz / (1 + z / a)|$$

$$dz/dR = (1 + z/a) * (m^2 - C^2)^{1/2} / C$$

or

$$dz = (1 + z/a) * (m^2 - C^2)^{1/2} * dR/C$$

where $C = (1 + z0/a) * n0 * \cos(\theta_0)$ (i.e. a constant)
z0 is starting height
a is radius of earth
n0 is starting refractive index (i.e. 1.000300, or thereabouts)
$\theta_0$ is starting elevation angle (angle above horizontal)
$m = (1+z/a)*n$ (m is known as the modified refractive index)

5. Obtain the difference between the estimated bent path length and the straight-line path (obtained from the estimated emitter position). This forms a correction to the TDOA measurement in Step 1. Then go to Step 2.
6. Continue until the corrections in Step 5 converge.

A Kalman filter, as shown in Figure 4, may additionally be employed for filtering the emitter location estimates. Since the Kalman filter is used with more than one measurement the correction scheme is applied to several TDOA measurements separately and the corrections (from Step 6 above) are averaged.

Thus, the difference between the refracted path length, R, and the slant range $R_T$ for a particular platform forms a correction to the TDOA measurements. The adjusted TDOA measurements are then used to provide a "refined" estimate of emitter position and, hence, "refined" estimates of ground ranges and "refined" estimate of TDOA correction. It is expected that there is a point at which the corrections do not change significantly. There may be situations where this may occur but a factor which precludes this is the highly similar paths of the ELS platforms (platforms are close together with respect to their distance to the emitter), since, then, the path residuals mentioned above will be relatively small, giving rise to reasonable initial estimate of emitter position.

Illustrations

The invention has been tested by simulation for a number of different cases, but with the basic scenario consisting of an emitter located over 300km from 4 closely-spaced airborne receiving platforms at a nominal 10km altitude. Various refractive profiles were assumed, including the standard ITU exponential model and one representative of Dakar - this being a particularly "bad" case for ray bending. The behaviour of the algorithm is the presence and absence of other measurement errors was performed as well as its interaction with a further stage of emitter estimate refinement (Kalman filtering).

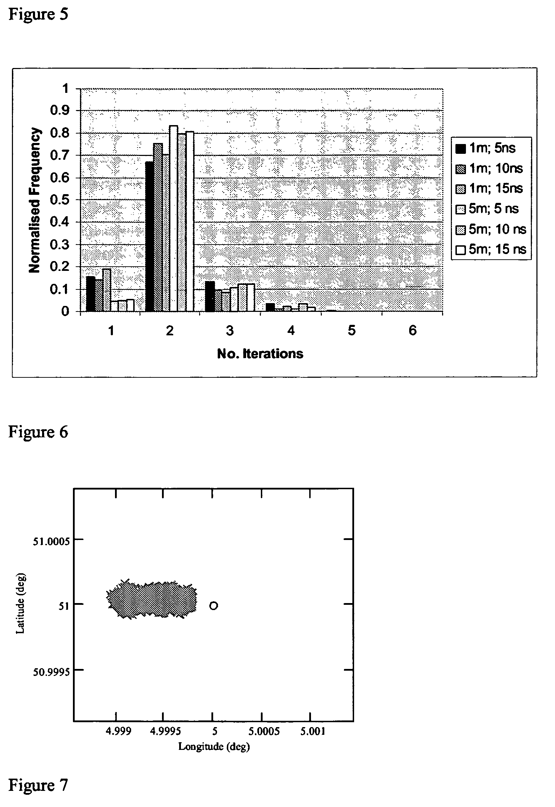

Figure 5 shows the effect of correction on the estimation of the emitter position in the presence of atmospheric refraction via the standard ITU exponential model (and no other measurement errors). In this case the emitter location was estimated perfectly. Without correction the emitter was located approximately 28m from its true position.

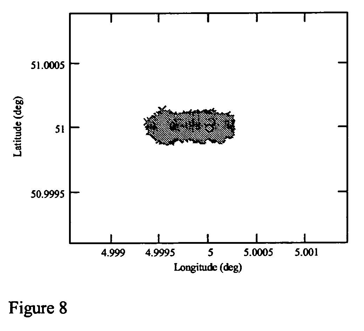

Another test observed the output of the Kalman filter refinement stage as shown in Figure 4. Figures 7 and 8 show the output of the Kalman filter in its steady-state (i.e. when its output had converged), where the TOA measurements have been subjected to path bending, described by a model for Dakar, firstly without correction then with correction via the proposed scheme. Quantitatively, the improvement obtained over a number of statistical runs is shown in the following table:

Table: Mean and standard deviation of EKF location solution error (to two decimal places)

|  | Latitude (m) | | Longitude (m) | | Altitude (m) | |
| --- | --- | --- | --- | --- | --- | --- |
|  | Mean | S.D. | Mean | S.D. | Mean | S.D. |
| Correction | 0.51 | 048 | -2.59 | 8.06 | -17.71 | 14.77 |
| No correction | -3.92 | 0.49 | 32.29 | 8.11 | 1576.08 | 14.9 |

A statistical approach was used for analysing solution convergence of the algorithm of Figure 2. 200 sets of TDOA measurements (each set consists of three TDOA values obtained from the four ELS platforms were synthesised with random measurement errors. Each measurement was processed as above, and the number of iterations required to achieve convergence recorded. The results are shown in Figure 6.

Observations of the results showed that there was little difference in convergence for the different platform pairs, hence the results from all three pairs were conglomerated to form a histogram. Therefore 600 iteration values were analysed. These cases cover two different levels of platform position error: 1 m and 5m, and three levels of TOA error: 5ns, 10ns and 15ns. These values represent one Standard Deviation. These values were chosen to examine how the level of measurement error affects the estimation of TDOA correction.

As shown, two to four iterations are sufficient to "ensure" convergence to a solution. In the case of oscillatory behaviour an even number of solutions should be averaged to derive a final solution.

Accuracy of the converged TDOA correction estimates was investigated by calculating a TDOA correction estimate for each of a number of measurements (200 sets of TDOA values, each subjected to random platform position and TOA errors), comparing these estimates with the true corrections then obtaining the mean and standard deviation of the errors. Although measurement errors were present (see above) the results show that sub-metre accuracy is obtainable, with a spread of similar magnitude. Slightly greater error spread was observed with larger measurement errors, but only marginally so.

These results indicate that measurement error should not significantly affect the accuracy of the TDOA correction scheme, when the refractive profile is known.

Whilst in the embodiment the invention has been described in the context of location of a ground-based emitter by airborne platforms, the invention could alternatively work with little modification in the opposite sense i.e. in context of location of an airborne emitter by ground-based (or airborne) receiving platforms. Furthermore, it is to be appreciated that the invention may work with any arbitrary atmospheric refractive profile, if desired, for example even if not defined fully by mathematical equations.

**Claims**

1. A method for locating an emitter of electromagnetic waves utilising a plurality of receivers, the method comprising the steps of:

   a. detecting the times of arrival of said electromagnetic waves at said receivers;
   b. computing the relative time difference of arrival between said receivers using said detected times of arrival;
   c. estimating the position of the emitter from said computed relative time differences of arrival; and
   d. correcting said detected times of arrival for path length discrepancies caused by the earth's atmosphere;
   **characterised in that** step (d) includes the additional steps of:

   e. measuring time differences of arrival between pairs of said receivers;
   f. obtaining an estimate of emitter position assuming a straight-line path between each receiver and said emitter;
   g. for each receiver using said estimate and obtaining the ground range from emitter to receiving platform;
   h. using said ground range known receiving platform height and an assumed refractive profile in selected ray-tracing integral equation to predict actual path length;
   i. obtaining the difference between said predicted path length and said straight-line paths to form corrections to said time differences of arrival;
   j. repeating steps (e) to (i) until said corrections converge; and
   k. applying said converged corrections to correct said detected times of arrival of said electromagnetic waves at said receivers.

2. A method according to claim 1, wherein step e) utilises at least three pairs of receivers.

3. A method according to claim 1 or 2, wherein said path length discrepancies are caused by refraction, and said selected ray-tracing integral equation comprises:

$$R = \int_{h_0}^{h_1} \frac{n(h)}{\sqrt{1 - \left[\frac{n_0 \cos(\theta_0)}{n(h)\left[1+\frac{h}{re}\right]}\right]^2}} . dh ,$$

where R is the path length, n (h) describes the atmospheric refractive profile as a function of height, $n_0$ is the refractive index at the earth surface, $\theta_0$ is the take-off angle of the ray at the emitter, $h_0$ and $h_1$ are the start and end heights of the path, re is the earth radius.

4. A method according to any one of claims 1 to 3, wherein step d) further utilises a Kalman filter for improving said correction.

5. A method according to any one of the preceding claims, wherein each receiver is mounted on a respective airborne platform and said emitter is - either ground-based or airborne.

6. A method according to any one of claims 1 to 4, wherein each receiver is mounted on a respective ground-based platform and said emitter is airborne.

7. Apparatus for carrying out the method according to any one of the preceding claims, the apparatus comprising:-

    a plurality of receivers, each receiver including means for detecting the time of arrival of electromagnetic waves received thereat;
    means for computing the relative time differences of arrival between said receivers and for estimating the position of the said emitter; and
    means for correcting said detected times of arrival for path length discrepancies caused by the earth's atmosphere;
    **characterised in that** the correcting means is arranged to carry out the following steps:

    a. measure time differences of arrival between said pairs of said receivers;
    b. assuming straight line paths, obtain an estimate of emitter position;
    c. for each receiver, using said estimate to obtain the ground range from emitter to receiving platform;
    d. using said ground range and known receiving platform height and an assumed refractive profile in a selected ray tracing integral equation, predict actual path length;
    e. obtain the difference between said predicted path length and the straight-line path obtained from the estimated emitter position to form a correction to said time differences of arrival in step (a)
    f. return to step (a) and;
    g. continue until the corrections in step (e) converge; then apply said detected times of arrival of said electromagnetic waves at said receivers.

8. A computer program comprising program code means for performing the method steps of any one of claims 1 to 6 when the program is run on a computer.

9. A computer program according to claim 8 in which the program code means is stored on a computer readable medium.

10. A computer loaded with a computer program according to claim 8, or a computer program on computer readable media according to claim 9.

**Patentansprüche**

1. Verfahren zur Lokalisierung eines Emitters elektromagnetischer Wellen unter Verwendung einer Vielzahl von Empfängern, wobei das Verfahren die Schritte umfasst:

   a. Detektieren der Ankunftszeitpunkte der elektromagnetischen Wellen an den Empfängern;
   b. Berechnen der relativen Ankunftszeitpunktdifferenz zwischen den Empfängern unter Verwendung der detektierten Ankunftszeitpunkte;
   c. Schätzen der Position des Emitters aus den berechneten relativen Ankunftszeitpunktdifferenzen; und
   d. Korrigieren der detektierten Ankunftszeitpunkte hinsichtlich durch die Erdatmosphäre verursachter Pfadlängendiskrepanzen;
   **dadurch gekennzeichnet, dass** Schritt (d) die zusätzlichen Schritte umfasst:

   e. Messen von Ankunftszeitpunktdifferenzen zwischen Paaren der Empfänger;
   f. Erhalten eines Schätzwerts der Emitterposition unter der Annahme eines geradlinigen Pfads zwischen jedem Empfänger und dem Emitter;
   g. Verwenden des Schätzwerts und Erhalten der Bodenentfernung vom Emitter zur Empfangsplattform für jeden Empfänger;
   h. Verwenden der Bodenentfernung, der bekannten Empfangsplattformhöhe und eines angenommenen Brechungsprofils in einer ausgewählten Strahlverfolgungs-Integralgleichung, um die tatsächliche Pfadlänge vorherzusagen;
   i. Erhalten der Differenz zwischen der vorhergesagten Pfadlänge und den geradlinigen Pfaden, um Korrekturen an den Ankunftszeitpunktdifferenzen auszubilden;
   j. Wiederholen der Schritte (e) bis (i), bis die Korrekturen konvergieren; und
   k. Anwenden der konvergierten Korrekturen, um die detektierten Ankunftszeitpunkte der elektromagnetischen Wellen an den Empfängern zu korrigieren.

2. Verfahren nach Anspruch 1,
   wobei Schritt e) zumindest drei Paare von Empfängern verwendet.

3. Verfahren nach Anspruch 1 oder 2,
   wobei die Pfadlängendiskrepanzen durch Brechung verursacht werden und die ausgewählte Strahlverfolgungs-Integralgleichung umfasst:

$$R = \int_{h_0}^{h_1} \frac{n(h)}{\sqrt{1 - \left[\dfrac{n_0\cos(\theta_0)}{n(h)\left[1 + \dfrac{h}{re}\right]^2}\right]}} \, . \, dh,$$

   wobei R die Pfadlänge ist, n (h) das atmosphärische Brechungsprofil als Funktion der Höhe beschreibt, $n_0$ der Brechungsindex an der Erdoberfläche ist, $\theta_0$ der Startwinkel des Strahls an dem Emitter ist, $h_0$ und $h_1$ die Start.- und Endhöhe des Pfads sind, re der Erdradius ist.

4. Verfahren nach einem der Ansprüche 1 bis 3,
   wobei Schritt d) ferner ein Kalman-Filter zur Verbesserung der Korrektur verwendet.

5. Verfahren nach einem der vorstehenden Ansprüche,
   wobei jeder Empfänger an einer jeweiligen sich in der Luft befindenden Plattform angebracht ist und der Emitter entweder bodenbasiert ist oder sich in der Luft befindet.

6. Verfahren nach einem der Ansprüche 1 bis 4,
   wobei jeder Empfänger an einer jeweiligen bodenbasierten Plattform angebracht ist und sich der Emitter in der Luft befindet.

**7.** Vorrichtung zur Ausführung des Verfahrens nach einem der vorstehenden Ansprüche, wobei die Vorrichtung umfasst:

eine Vielzahl von Empfängern, wobei jeder Empfänger ein Mittel zur Detektion des Ankunftszeitpunkts von daran empfangenen elektromagnetischen Wellen umfasst;
ein Mittel zur Berechnung der relativen Ankunftszeitpunktdifferenzen zwischen den Empfängern und zur Schätzung der Position des Emitters;
und
ein Mittel zur Korrektur der detektierten Ankunftszeitpunkte hinsichtlich durch die Erdatmosphäre verursachter Pfadlängendiskrepanzen;
**dadurch gekennzeichnet, dass** das Korrekturmittel eingerichtet ist, um die folgenden Schritte auszuführen:

a. Messen von Ankunftszeitpunktdifferenzen zwischen den Paaren der Empfänger;
b. Erhalten eines Schätzwerts der Emitterposition unter der Annahme geradliniger Pfade;
c. Verwenden des Schätzwerts zum Erhalt der Bodenentfernung vom Emitter zur Empfangsplattform für jeden Empfänger;
d. Vorhersagen der tatsächlichen Pfadlänge unter Verwendung der Bodenentfernung und der bekannten Empfangsplattformhöhe und eines angenommenen Brechungsprofils in einer ausgewählten Strahlverfolgungs-Integralgleichung;
e. Erhalten der Differenz zwischen der vorhergesagten Pfadlänge und dem geradlinigen Pfad, die aus der geschätzten Emitterposition erhalten wird, um eine Korrektur an den Ankunftszeitpunktdifferenzen in Schritt (a) auszubilden
f. Rücksprung zu Schritt (a) und;
g. Fortfahren, bis die Korrekturen in Schritt (e) konvergieren; dann Anwenden der detektierten Ankunftszeitpunkte der elektromagnetischen Wellen an den Empfängern.

**8.** Computerprogramm, umfassend ein Programmcodemittel zur Durchführung der Verfahrensschritte nach einem der Ansprüche 1 bis 6, wenn das Programm an einem Computer ausgeführt wird.

**9.** Computerprogramm nach Anspruch 8,
wobei das Programmcodemittel an einem von einem Computer lesbaren Medium gespeichert ist.

**10.** Computer, an dem ein Computerprogramm nach Anspruch 8 oder ein Computerprogramm an von einem Computer lesbaren Medien nach Anspruch 9 geladen ist.

## Revendications

**1.** Procédé destiné à localiser un émetteur d'ondes électromagnétiques en utilisant une pluralité de récepteurs, le procédé comprenant les étapes consistant à :

a. détecter les temps d'arrivée desdites ondes électromagnétiques au niveau desdits récepteurs ;
b. calculer la différence de temps d'arrivée relative entre lesdits récepteurs en utilisant lesdits temps d'arrivée détectés ;
c. estimer la position de l'émetteur à partir desdites différences de temps d'arrivée relatives calculées ; et
d. corriger lesdits temps d'arrivée détectés pour ce qui est des écarts des longueurs de trajets provoqués par l'atmosphère terrestre ;
**caractérisé en ce que** l'étape (d) comprend les étapes supplémentaires consistant à :

e. mesurer les différences de temps d'arrivée entre les paires desdits récepteurs ;
f. obtenir une estimation de la position de l'émetteur en supposant un trajet en ligne droite entre chaque récepteur et ledit émetteur ;
g. pour chaque récepteur, utiliser ladite estimation et obtenir la distance au sol à partir de l'émetteur jusqu'à une plate-forme de réception ;
h. utiliser ladite distance au sol, la hauteur connue de plate-forme de réception et un profil de réfraction supposée dans une équation intégrale de tracé de rayons sélectionnée de façon à prédire la longueur de trajet réelle ;
i. obtenir la différence entre ladite longueur de trajet prédite et lesdits chemins en ligne droite de façon à former des corrections à apporter auxdites différences de temps d'arrivée ;

j. répéter les étapes (e) à (i) jusqu'à ce que lesdites corrections convergent ; et

k. appliquer lesdites corrections qui ont convergé de façon à corriger lesdits temps d'arrivée détectés desdites ondes électromagnétiques au niveau desdits récepteurs.

**2.** Procédé selon la revendication 1, dans lequel l'étape e) fait appel à trois paires de récepteurs au moins.

**3.** Procédé selon la revendication 1 ou la revendication 2, dans lequel lesdits écarts de longueurs de trajets sont provoqués par la réfraction, et ladite équation intégrale de tracé de rayons sélectionnée comprend :

$$R = \int_{h_0}^{h_1} \frac{n(h)}{\sqrt{1 - \left[\frac{n_0 \cos(\theta_0)}{n(h)\left[1 + \frac{h}{re}\right]^2}\right]}} \, dh$$

où $R$ représente la longueur du trajet, $n(h)$ décrit le profil de réfraction atmosphérique en fonction de la hauteur, $n_0$ représente l'indice de réfraction au niveau de la surface de la terre, $\theta_0$ représente l'angle de départ du rayon au niveau de l'émetteur, $h_0$ et $h_1$ représentent les hauteurs de début et de fin du trajet, re représente le rayon de la terre.

**4.** Procédé selon l'une quelconque des revendications 1 à 3, dans lequel l'étape d) fait appel en outre à un filtre de Kalman de façon à améliorer ladite correction.

**5.** Procédé selon l'une quelconque des revendications précédentes, dans lequel chaque récepteur est monté sur une plate-forme de bord respective, et ledit émetteur se situe au sol ou est embarqué.

**6.** Procédé selon l'une quelconque des revendications 1 à 4, dans lequel chaque récepteur est monté sur une plate-forme au sol respective, et ledit émetteur est embarqué.

**7.** Appareil destiné à exécuter le procédé selon l'une quelconque des revendications précédentes, l'appareil comprenant :

une pluralité de récepteurs, chaque récepteur comprenant des moyens destinés à détecter le temps d'arrivée des ondes électromagnétiques reçues à leur niveau ;

des moyens destinés à calculer les différences de temps d'arrivée relatives entre lesdits récepteurs et à estimer la position dudit émetteur ; et

des moyens destinés à corriger lesdits temps d'arrivée détectés vis-à-vis des écarts des longueurs de trajet provoqués par l'atmosphère terrestre ;

**caractérisé en ce que** les moyens de correction sont agencés de façon à exécuter les étapes suivantes consistant à :

a. mesurer les différences de temps d'arrivée entre lesdites paires desdits récepteurs ;

b. en supposant des trajets en ligne droite, obtenir une estimation de la position de l'émetteur ;

c. pour chaque récepteur, utiliser ladite estimation de façon à obtenir la distance au sol à partir de l'émetteur jusqu'à une plate-forme de réception ;

d. en utilisant ladite distance au sol, la hauteur connue de la plate-forme de réception et un profil de réfraction supposé dans une équation intégrale de tracé de rayons sélectionnée, prédire la longueur de trajet réelle ;

e. obtenir la différence entre ladite longueur de trajet prédite et le trajet en ligne directe obtenu à partir de la position estimée de l'émetteur de façon à former une correction apportée auxdites différences de temps d'arrivée dans l'étape (a) ;

f. revenir à l'étape (a) ; et

g. continuer jusqu'à ce que les corrections de l'étape (e) convergent, puis appliquer lesdits temps d'arrivée détectés desdites ondes électromagnétiques au niveau desdits récepteurs.

**8.** Programme informatique comprenant des moyens de code de programme destinés à exécuter les étapes du procédé selon l'une quelconque des revendications 1 à 6, lorsque le programme est exécuté par un ordinateur.

9. Programme informatique selon la revendication 8, dans lequel les moyens de code de programme sont stockés dans un support qui peut être lu par un ordinateur.

10. Ordinateur dans lequel est chargé un programme informatique selon la revendication 8, ou un programme informatique qui se situe dans un support qui peut être lu par un ordinateur selon la revendication 9.

ELS Platform 3

ELS Platform 1

ELS Platform 2

ELS Platform 4

R

R$_T$

H

G

Emitter

Figure 1. Illustration of atmospheric refraction

{TDOA$_1$, TDOA$_2$, TDOA$_3$}

subject to:
Measurement error
Platform Position error
Propagation path error

LEVA / CHAN

Hyperboloid
intersection algorithm

Estimated Emitter Position, $\hat{P}_e$

Estimated ground range to each platform

DETERMINE
OPTICAL PATHS

Numerical Integration
Based on:
- Refractivity profile
- Ground range
- Terminal heights

DIFFERENCE BETWEEN
OPTICAL PATHS AND
SLANT RANGES

{$\gamma_1$, $\gamma_2$, $\gamma_3$, $\gamma_4$}

DETERMINE TDOA CORRECTIONS

$$\begin{pmatrix} \gamma_2 - \gamma_1 \\ \gamma_3 - \gamma_1 \\ \gamma_4 - \gamma_1 \end{pmatrix}$$

APPLY CORRECTIONS
TO TDOAs

No

Corrections
converged?

Yes

Finish

Figure 2

Figure 3

Figure 4

Figure 5

Figure 6

Figure 7

Figure 8

## REFERENCES CITED IN THE DESCRIPTION

### Non-patent literature cited in the description

- Microwave Emitter Position Location: Present and Future. *International Conference on Microwaves and Radar,* 20 May 1998, vol. 4, 97-116

- **LEVA.** An alternative closed-form solution to the GPS pseudorange equations. *Mitre Journal,* 1997, 39-54